Europäisches Patentamt

European Patent Office

Office européen des brevets

(19)

(11) Publication number: **0 154 137 B1**

(12) **EUROPEAN PATENT SPECIFICATION**

(45) Date of publication of patent specification: **24.04.91**

(51) Int. Cl.⁵: **A61C 5/08**, A61C 5/10, A61C 13/00, A61C 13/08

(21) Application number: **85100625.4**

(22) Date of filing: **22.01.85**

(54) Dental restoration shading.

(30) Priority: **01.02.84 US 576100**

(43) Date of publication of application:
**11.09.85 Bulletin 85/37**

(45) Publication of the grant of the patent:
**24.04.91 Bulletin 91/17**

(84) Designated Contracting States:
**AT BE CH DE FR GB IT LI LU NL SE**

(56) References cited:
**EP-A- 0 022 655      EP-A- 0 047 873
EP-A- 0 062 156      DE-A- 2 531 113
DE-A- 2 612 554      DE-A- 3 125 924
DE-B- 2 632 871      DE-C- 764 447
DE-U- 7 918 240      US-A- 3 449 832
US-A- 3 934 348**

**J. PROSTHET. DENT., February 1977; N. BAR-GHI et al. "Porcelain shade stability after repeated firing", pages 173-175**

(73) Proprietor: **DENTSPLY INTERNATIONAL, INC.
570 West College Avenue P.O. Box 872
York Pennsylvania 17405(US)**

(72) Inventor: **Blair, John J.
965 Brockie Lane
York Pennsylvania 17403(US)**
Inventor: **Shue, Roger C.
R.D. No. 4
Red Lion Pennsylvania 17356(US)**

(74) Representative: **Wächtershäuser, Günter, Dr.
Tal 29
W-8000 München 2(DE)**

**Description**

BACKGROUND OF THE INVENTION

This invention relates to shaded and/or colored dental restoration and methods for their preparation and especially to dental restorations that appear more natural and esthetically appealing.

It has long been known in the dental profession that the good esthetics of dental prostheses are to a significant degree determined by the hue, the chroma and the value of the visibly exposed portions of the dental restoration. These qualities follow the Munsell color system for designating color which employs three perceptually uniform scales (Munsell hue, Munsell value and Munsell chroma) defined in terms of daylight reflection. (McGraw-Hill Dictionary of Scientific and Technical Terms - 3rd Ed.). Translucency or the quality of transmitting and diffusing light, which gives a perception of depth is also an important parameter.

Insofar as is known, in the past it has been considered necessary in producing esthetically satisfactory artificial tooth restorations to build the tooth's color throughout all of the light passing or translucent portions of the dental restoration. By throughout all the translucent portions it is meant the entire depth of the tooth prosthesis through which light passes to the eye of an observer. Building the color throughout the depth of the dental restoration is certainly logical from the standpoint that a natural tooth does build the color throughout its depth.

It has now been discovered, however, that what might be called an optical illusion of a natural tooth appearance can be achieved by not coloring the dental prosthesis throughout its entire light passing depth but instead by applying an opaquing layer of specific hue and chroma overlayed with a translucent build up layer that is substantially hue and chroma free while being translucent to light and applying a shader over this uncolored layer to provide a final esthetic effect. Not only is the appearance superior but the number of build up material variations that are required to match the unique variation in natural teeth can be reduced from about 40 to a single build up material being required to satisfy substantially all of the application requirements. No shading is required between the underlying opaquing layer and the outer shader layer.

From EP-A-0062156 a dental restoration is known comprising an outer shader layer, an intermediate substantially uncolored layer and an opaque substructure. However, an easy method of producing a superior esthetic dental restoration is not taught.

US-A-3449832 describes already the use of a translucent layer. However, again a simplified method of achieving excellent color appearance is not taught.

It is an object of the present invention to provide dental restorations with superior esthetic appearance.

It is a further object of the present invention to provide an easier method of producing superior esthetic dental restorations.

It is a still further object of the present invention to provide a method of producing dental restorations that enable less expensive correction of mistakenly produced hues, chromas and values.

SUMMARY OF THE INVENTION

These objects are achieved with the dental restoration in accordance with claim 1 and with a method of preparing a dental restoration in accordance with claims 10 and 20. Special selected aspects of the invention are discussed as follows:

By an aspect of the invention a dental resoration is provided that has an outer shader layer; an intermediate at least substantially uncolored, translucent layer; and an opaque substructure. In one preferred specie of the invention the intermediate layer is a homogeneous single cast mica glass-ceramic crown member and the outer shader layer is a shaded dental porcelain. The outer shader layer is applied to the crown member while it is removably mounted on an opaqued dental mount matched with an opque dental cement color keyed with the shaded dental porcelain to match a shade guide.

In another preferred specie of the invention the opaque substructure is a metal support with a surface opaquing agent and the surface opaquing agent is a dental opaque porcelain. The intermediate layer is a homogeneous single layer of dental porcelain and the outer shader layer is a shaded dental porcelain.

By other aspects of the invention are provided methods of expediently producing the dental restorations of the present invention.

BRIEF DESCRIPTION OF THE DRAWINGS

Figure 1 is a diagrammatic view of one specie of the present invention.
Figure 2 is a diagrammatic view of another specie of the present invention.

DESCRIPTION OF THE PREFERRED EMBODIMENT

The present invention in its preferred embodiment is a restoration having an outer shader layer; an intermediate, at least substantially uncolored, translucent layer and an opaque layer and a substructure. Each of the layers can be made up of a plurality of lamina or plies. An aspect of the present invention is a method of preparing a dental restoration by applying to an opaque dental substrate a translucent layer substantially free of hue and chroma and a shader layer.

As used in this patent application shader includes shading porcelains, stains, glazes and combinations and equivalents thereof.

There are two primary species of the genus of the present invention. One of the species involves the preparation of metal free dental crowns and/or bridges that will be put upon natural tooth stump preparations. The other specie is the preparation of a dental restoration such as a bridge or a crown having a metal substrate. It will be understood that the shader layer is matched with an underlying opaque dental substrate in each instance. The opaque dental substrate may be either a temporary member or a substrate that from the beginning is a permanent portion of a built-up dental restoration.

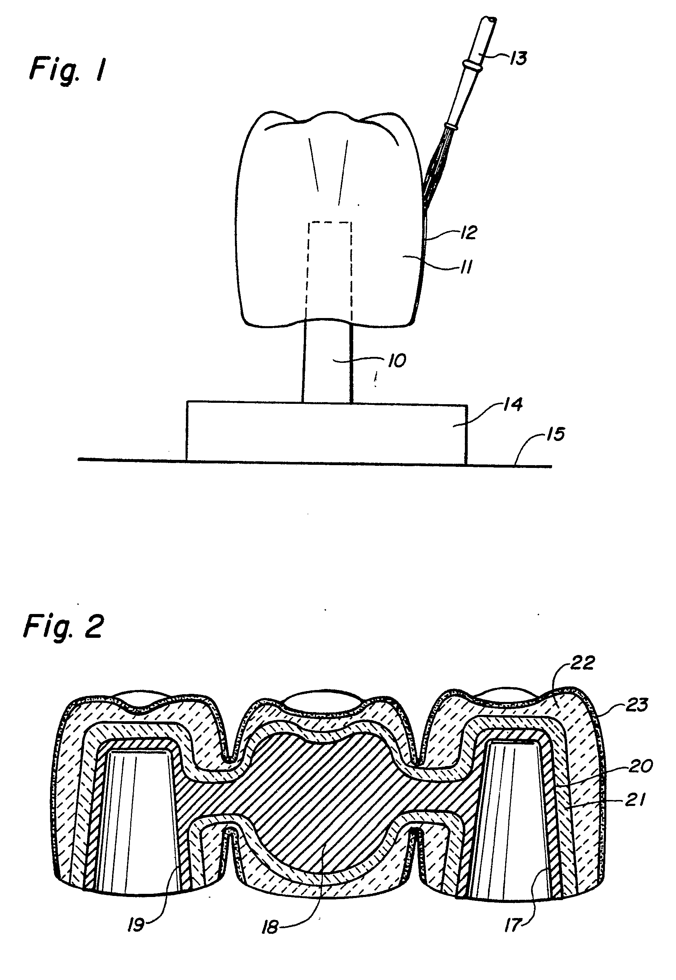

Considering first the procedure for preparing dental crowns and looking at Figure 1 an opaqued dental mount 10 is shown. This opaqued dental mount may be a model of a prepared dental stump preparation made from an impression taken of a patient's mouth in the conventional manner. The dental mount may be made from an opaque material cast in the usual manner or may be cast from any suitable castable material and then provided with appropriate opaquing either by the application of a layer of opaque dental cement identical to the dental cement that will be used for subsequent mounting of the crown or another opaquing material which could be composed of a number of separate members or materials.

The opaque material should have the same hue and chroma as the dental cement that will subsequently be used in positioning the crown in a patient's mouth. It is, of course, possible to use a combination of opaquing materials and cements both on the dental mount and on the dental stump preparation in the patient's mouth so long as the combined effect is substantially the identical hue and chroma in both instances. The crown, preferably comprised of a mica glass ceramic, is prepared by known casting methods; see Canadian Patent No. 1,148,306 to Peter J. Adair assigned to Corning Glass Works issued June 6, 1983.

Turning now to Figure 1, the dental mount 10 can be seen. The dental mount 10 can be the die used in molding the crown or it may be one of a number of universal mounts. As a general understanding, it is not necessary that the mount be an exact fit within the crown, i e, an exact replica of the dental stump preparation in the patient's mouth. In fact, it is within the purview of the present invention for the dental mount 10 to be of a resilient or deformable material allowing a broader use within a wider range of crowns. The dental mount 10 must, however, be opaqued to the required hue and chroma as the principle is described in this patent application. It is anticipated that in usual practice the dental mount will be as nearly replica of the dental stump preparation within the patient's mouth as is commercially accepted in conventional laboratory practice at the present time and considering the use of the presently used commercial die spacers or their equivalents.

The crown 11 is preferably substantially uncolored and translucent throughout. Preferably the crown appears white and substantially free of hue and chroma to the unaided eye when viewed unmounted without internal opaque and external shader. By uncolored it will be understood to include white. The intensity of the white is its value. The crown is preferably of a material that when viewed mounted with the internal opaque dental mount passes the hue and substantially reduces the chroma of the internal opaque. In other words, the crown, or that is the body crown or main body of the crown; i e the uncolored, translucent layer should allow the hue to be seen through it while attenuating the internal chroma.

After the crown 11 has been mounted on the opaque dental mount 10, shader 12 is applied to the crown, preferably matching the crown with one of the commercial shade guides which was previously matched with the intended dental setting, typically the other teeth in a patient's mouth or the skin color and general intended esthetics that are to be provided for the patient.

The preferable shaders are of the dental porcelain type, more preferably the self glazing dental porcelains. The shader is applied to the crown using appropriate known techniques while viewing through the uncolored translucent crown to the opaque dental mount. The shader 12 is applied in conventional manner, for example with a brush 13. The shader is matched and preferably indexed to the hue value and

EP 0 154 137 B1

chroma of the opaque to complete the appearance match of the restoration to the natural tooth by the skilled dental laboratory professional.

It is clearly contemplated that the dental crown may be removed from the dental mount during staining so that the shader may be cured in several applications or layers including spotting and lining in the shader, etc., if desired. Furthermore, it is obvious that the crown itself can be made up of several layers in instances where this would be a desirable expedient.

A thus shaded and prepared crown is finally removed from the opaque dental mount and with or without further treatment to stabilize the shader layer as may be necessary, transferred to the dental operatory for placement in a patient's mouth or if it is to be applied to a supporting substrate as can be done in what is known as unit build bridgework transferred to the setting where they will be joined. In the instance where the crown will be placed upon a dental stump preparation, opaque material having substantially the same hue and chroma as the hue and chroma of the opaque dental mount is provided between the shaded crown and the substrate. For instance, when joined with a dental stump preparation dental cement is used that has been provided with opacity and the required hue and chroma.

Turning next to Figure 2, a three tooth bridge is shown. The bridge is made up of the following metal sub-structure: a metal abutment member 17, a bridging pontic member 18 and a metal abutment member 19. The bridge is of a standard type and may be formed of either base metals or precious metals and their alloys. The upper surface metal 20 should be opaque and is shown opaqued with an opaquing layer 21. The opaquing material may be any of the known opaquing porcelain powders or their equivalents.

Of course, the opaquing may be by a multiple plied layer as well as via a singly applied homogeneous layer of material or the metal supporting base substrate could itself be formed of or coated by an appropriate opaque material having the desired hue and chroma.

Next a layer 22 of at least substantially hue free, translucent material is applied to at least a portion of the opaqued base substrate and using current accepted practice the substantially hue free or uncolored translucent material completely covers the opaque upper surfaces as shown in Figure 2. The substantially hue free or uncolored, translucent material may be either a material such as mica ceramic glass or, more preferably, in the case of conventional metal substrates, a porcelain that is fluorescent, lightly tinted or colored and opacified to the approximate level of natural tooth enamel. The light tint would conventionally be that inherent in the natural materials from which dental porcelains are conventionally made and especially the feldspars. In special situations the natural tint could be modified with small additions of pigments to, for example, provide a uniform and consistent hue and chroma throughout a given batch of material as well as from batch to batch; which might otherwise vary due to variations in natural feldspars that are typically used to compound dental porcelains.

The substantially hue free, translucent layer 22, which can be built up or applied as a single layer to build the complete anatomical tooth form, would typically be air and/or vacuum fired in conventional manner and any necessary grinding for adjustment of the crown or bridge would then be carried out.

Finally, a shader layer 23 is applied to the translucent layer 22 remote from the opaqued base substrate surface 20. In other words, the shader is applied on the surface of the layer 22 opposite the substrate surface 20. This shader 23 provides the color match necessary to complete the dental restoration. The shader layer 23 can have incisal portions that are one shade of dental porcelain and body or neck portions that are another dental porcelain. The incisal portions may have an enamal dental portion applied to them that are very simlar in hue and chroma to the translucent layer 22.

The complete shaded dental crown or appliance can then be placed in the patient's mouth on the dental stump preparation and after testing for fit, the opaqued cement with the hue and chroma that is matched by the opaqued dental model can be interposed between the shaded dental crown and the stump preparation, typically by application of the cement to the dental stump preparation and firm seating of the crown thereover. Before the cement sets the esthetic correctness of the crown's, hue, chroma and value can be judged and if not as desired the crown can be removed and modified without destroying the crown.

Reliance of the system of the present invention on external shade applications for final color match to the patient's natural teeth, permits simple modification of the shade in the dental office or adjacent laboratory in those cases where the initial shade prescription by the dentist was in error or where the laboratory through inadvertence has failed to match a correctly prescribed shade. Modification of a complete crown through an additional application of colorants or through removal of all or part of the shaded and glazed outer surface and reapplication of the desired corrected shade and/or glaze shader can be carried out in, for example, 15 minutes or less in most instances, as contrasted to the time consuming complete rebuilding required for a conventional porcelain fused to metal restoration which relies on several layers of shaded body and enamel porcelains to achieve a desired esthetic result.

The procedure of the present invention described above results in natural esthetic color matching in far

4

shorter times than for conventional ceramic build up techniques and reduces to one build up porcelain the 40 or more separate bottles of body and enamel porcelain powders which otherwise would be necessarily inventoried to match the wide variety of colors now offered in commercial systems in order to match the variety of shades found in natural dentition.

One of the very substantial advantages of the present procedure is that only at the stage of applying the shader is the advanced skill of the laboratory professional required in order to obtain the esthetically complimentary match intended.

Another substantial advantage of the present procedure is that modification to overcome error is much easier because the shader is only the outer layer and if the end result is not exactly satisfactory then the outer surface can be abraded with standard dental laboratory mounted stones, wheels or points or grit blasted to substantially remove the shader layer. It would also often be possible to accomplish modification through the addition of shader without necessitating any shader removal.

The invention is further illustrated by the following example:

EXAMPLE I

In an actual dental laboratory set-up the following procedure was carried out. An opaqued dental mount was prepared by taking a model of the patient's stump preparation prepared in the conventional manner and forming a cast stone die also in conventional manner.

The gypsum cast model was opaqued by thoroughly coating with a colored lacquer keyed to match the colored permanent cement that was to be used in cementing the crown to the dental stump preparation in a patient's mouth. The lacquer was Caulk® liquid opaquer - ceramic pink, (a product of the LD Caulk Division of Dentsply International, Inc.), with additional colorants added to reach a hue and chroma of a regular or standard, yellow green opaquer in a thickness just great enough to totally mask the die or model.

A mica glass ceramic crown was prepared as taught in Canadian Patent 1,148,306 previously referred to in this patent application using the opaqued dental mount as the die. The crown obtained an interior hollow dimension of approximately 4.5mm (millimeters) wide and approximately 8mm deep or penetration to receive a dental stump preparation for placement in a patient's mouth. The crown had a labial thickness of about 1.5mm and a length of 10.0mm.

The mica glass-ceramic crown was placed on the opaqued dental substrate as shown in Figure 1, and shader dental porcelains were applied. The shader layer 12 was applied by using the procedures of a trained laboratory professional and matched to the BIOFORM® SHADE GUIDE - B69 using substantially standard manipulative techniques using the new staining dental porcelains described below:

The dental porcelain matrix for the body shader porcelain was prepared by tumble blending the following ingredients until visually homogeneous:

| PARTS | DESCRIPTION |
|---|---|
| 47.6 | Standard low thermal expansion over-glaze frit of a low viscosity glass having a particle size such that it passed through a 270 mesh US Standard Tyler sieve and a firing to gloss temperature of 871.1 to 926.7°C. (1600 to 1700°F). (Dentsply® NBK 1000 Glaze, a product of Dentsply International, Inc.) |
| 24.83 | Yellow Brown stain (Dentsply® stain 84) |
| 6.70 | Gray stain (Dentsply® stain 81) |
| 9.93 | Yellow Gray stain (Dentsply® stain 87) |
| 1.74 | Brown stain (Dentsply® stain 86) |
| 4.47 | Red stain (Dentsply® stain 78) |
| 3.23 | Black stain (Dentsply® stain 82) |

The Dentsply stains are dental ceramic stains of metal oxide pigments fritted into a glass carrier.

Next, a liquid carrier medium for the glaze matrix is prepared by charging the following ingredients to a mixer in the order listed and mixing at high sheer for one minute, brushing down from the side the material that spattered up and then mixing at high sheer for another minute:

GRANS | DESCRIPTION

| GRAMS | DESCRIPTION |
|---|---|
| 3.6 | Isopropyl Alcohol (99%) |
| 90.4 | 1,3 – Butanediol (99±%) |
| 6.0 | Silica (Aerosil R972, product of Degassa) |

The carrier medium and the shader matrix were then combined just prior to application by mixing in a small dish:

| QUANTITY | DESCRIPTION |
|---|---|
| 1 | Scoop of dry powder-Dentsply #1 scoop which holds about .8 grams |
| 5 | Drops of the liquid carrier medium |

Mixing was with a porcelain spatula to a thin paste consistency.

The first shader porcelain was applied in the usual area of the body porcelain starting at the labial side of the tooth and extending around the tooth, except not at the incisal portion for a distance of about 2mm from the incisal edge. The staining glaze was applied to yield a thickness of less than 0.1mm after firing.

A second glazing matrix was prepared as above except using the following recipe:

| PARTS | DESCRIPTION |
|---|---|
| 97.40 | Standard low thermal expansion over-glaze frit of a low viscosity glass having a particle size such that it passed through a 270 mesh US Standard Tyler sieve and a firing to gloss temperature of (1600 to 1700°F) 871.1 to 926.7°C. (Dentsply® NBK1000 Overglaze, a light orange stain product of Dentsply International Inc.) |
| 260 | Light Orange stain (Dentsply® stain 74) |

The 2nd staining glaze was prepared in the same manner described above for the 1st staining glaze except using the second glazing matrix.

The second staining glaze is the enamel porcelain and is applied to the 2mm wide incisal portion of the tooth and across the top of incisal edge of the tooth being shaped to form the outer incisal edge of the tooth. The enamel shader porcelain was not blended with the body shader porcelain or overlap it as is the usual practice but was simply brushed from the incisal edge to abut with the body shader porcelain or 1st staining porcelain. The thickness of application was again less than 0.1mm yield after firing.

After application of the dental porcelain shader coat as described above, including the first body staining porcelain and the second staining glaze, the coat was dried. An oven was heated to 787.8°C (1450°F) and the shaded crown was inserted into the oven for 2 seconds and removed for 4 seconds and this process repeated until no additional vapor was observable; being emitted from the surface of the dental porcelain shader coat and the surface of the shader coat appeared dry. This procedure prevents blistering or the formation of bubbles. The dry shader coated crown was then fired in a sagger oven at 787.8 to 926.7°C (1450°F to 1700°F) with a progression from 787.8 to 926.7°C (1450°F to 1700°F) of 37.8°C (100°F) per minute.

Next, a second shader coat of the two shader porcelains was applied over the first coat in the same manner just described with regard to the first coat and dried and cured in the same manner. This is to assure complete coverage and to assure shade fidelity.

Then, the now completed stained crown with the shader layer made up of the two coats of shader, each of which is made up of a dental shader body porcelain and a dental shader enamel porcelain, was repositioned on the opaque dental mount and found to match the BIOFORM® SHADE GUIDE - B69.

Next, a dental cement which had been pigmented to match the lacquer color was applied to the dental preparation in the patient's mouth and the crown was positioned in the patient's mouth and found by visual inspection to be of excellent esthetic value. The dental cement was a zinc phosphate cement - Modern TENACIN® SNOWITE - Caulk® - 621417 (a product of the L D Caulk Division of Dentsply International, Inc.).

EXAMPLE II

Another specie of the present invention was prepared using a supporting metal base substrate. The substrate was a three unit bridge of the general type shown in Figure 2 except of the central, lateral and canine teeth. The bridge contained a metal abutment member or portion 17, a bridging pontic member or portion 18 and a metal abutment member or portion 19. The bridge was cast from BIOBOND® II porcelain veneering alloy - a nickel, chromium, beryllium alloy product of Dentsply International, Inc., in conventional manner.

The upper surface 20 of the metal was opaqued with an opaquing layer 21, this opaquing material was an opaquing porcelain, (SHADEMATE™ opaque porcelain OA2, a product of Dentsply International, Inc). The opaquing porcelain was brushed on in conventional manner and fired at 996.1°C(1825°F)under vacuum in conventional manner to yield an opaquing layer of approximately 0.2mm thickness.

Next, a single homogeneous layer of uncolored translucent dental porcelain (similar to SHADEMATE™) neutral diluent was applied over the opaqued dental substrate as shown in Figure 2 to form the intermediate or build-up layer of the final product. This layer was contoured by brush and spatula by using the procedures of a trained laboratory professional to the general anatomy of the intended teeth in the manner of Figure 2. This intermediate layer was fired in a sagger oven at 593.3 to 954.4°C (1100°F to 1750°F) under vacuum with a progression of 37.8°C (100°F) per minute and a hold for 1 minute at the end. A patch bake, including the addition of porcelain due to shrinkage, was carried out in the normal manner. Finally, the intermediate layer was ground and contoured. The thickness of this uncolored translucent build up layer that is to become the intermediate layer varied after firing from approximately 0.5 to 1.5mm in thickness.

The shader was applied substantially identically to the procedure in Example I and the shader porcelains were formulated in the same manner as set forth in Example I except as follows:

The first shader porcelain matrix was prepared using the following recipe:

| PARTS | DESCRIPTION |
|---|---|
| 47.6 | Standard high thermal expansion over-glaze frit of a low viscosity glass having a particle size such that it passes through a270 mesh US Standard Tyler sieve and a firing to gloss temperature of (1600 to 1700°F) 871.1 to 926.7°C. (Dentsply® Herador Glaze, a product of Dentsply International, Inc.) |
| 24.83 | Yellow Brown stain (Dentsply® stain 84) |
| 6.70 | Gray stain (Dentsply® stain 81) |
| 9.93 | Yellow Gray stain (Dentsply® stain 87) |
| 1.74 | Brown stain (Dentsply® stain 86) |
| 4.47 | Red stain (Dentsply® stain 78) |
| 3.23 | Black stain (Dentsply® stain 82) |

A second shader porcelain matrix was prepared as above except using the following recipe:

| PARTS | DESCRIPTION |
|---|---|
| 97.40 | Standard high thermal expansion over glaze frit of a low viscosity glass having a particle size such that it passes through a 270 mesh US Standard Tyler sieve and a firing to gloss temperature of (1600 to 1700°F) 871.1 to 926.7°C. (Dentsply® Herador Overglaze, a product of Dentsply International Inc.) |
| 260 | Light Orange stain (Dentsply® stain 74) |

The finished product was inspected and found to have good esthetics.

While the invention has been primarily described with regard to the use of a shader layer that is of the typical dental porcelain that has hue and chroma and is used in preparing dental restorations it can be of other composition in special instances, for instance, a combination of dental stains over-glazed with a clear glaze could be used. It may also be desired in some instances to over-glaze the typical dental porcelains that can serve as the shader layer.

While in accordance with the patent statutes, what is considered to be the preferred embodiment of the invention has been described, it will be obvious to those skilled in the art that numerous changes and modifications may be made therein without departing from the invention and it is therefore aimed in the appended claims to cover all such equivalent variations as fall within the scope of the invention.

**Claims**

1. A dental restoration comprising an outer shader layer (23), an intermediate layer (22) which is substantially hue and chroma free and translucent and an opaque substructure (21) which has a specific chroma on the Munsell scale and a specific Munsell hue.

2. The dental restoration of Claim 1 wherein said opaque substructure is a metal support with a surface opaquing agent.

3. The dental restoration of Claim 1 wherein said intermediate uncolored translucent layer is removably mounted on said opaque substructure, said substructure comprising a dental mount.

4. The dental restoration of Claim 1 wherein said substructure comprises an opaque dental cement directly engaging said intermediate uncolored translucent layer.

5. The dental restoration of Claim 4 wherein said dental cement is engaged with a metal support remote from its said engagement with said intermediate uncolored translucent layer.

6. The dental restoration of Claim 4 wherein said dental cement is engaged with a dental stump preparation remote from its engagement with said intermediate uncolored translucent layer.

7. The dental restoration of Claim 1 wherein said intermediate layer is a homogeneous single cast mica glass-ceramic crown member, said outer shader layer comprising a shaded dental porcelain.

8. The dental restoration of Claim 7 wherein said substructure comprises an opaque dental cement color keyed with said shaded dental porcelain to match a shade guide.

9. The dental restoration of Claim 2 wherein said surface opaquing agent is a dental opaque porcelain, said intermediate layer is a homogeneous single layer of dental porcelain and said outer shader layer comprises a shaded dental porcelain.

10. A method for preparing a dental restoration by applying onto an opaque dental substrate having specific chroma on the Munsell chroma scale and a specific Munsell hue an intermediate layer, which is substantially hue and chroma free and translucent , and a shader layer.

11. The method of Claim 10 wherein said opaque dental substrate comprising opaque cement having hue and substantial chroma.

12. The method of Claim 10 wherein said translucent layer appears white and substantially free of hue and chroma to the unaided eye when viewed unmounted without internal opaque and without shader, and when viewed mounted with internal opaque passes the opaque's hue and substantially reduces the chroma of the internal opaque.

13. The method of preparing a dental restoration of Claim 10 wherein said opaque dental substrate is a metal support with an opaque dental cement thereon directly engaging said translucent layer.

14. The method of preparing a dental restoration of Claim 10 wherein said opaque dental substrate is a metal support unit a dental opaque porcelain thereon, said translucent layer is a homogeneous single layer of dental porcelain and said shader layer comprising shaded dental porcelain.

15. The method of preparing a dental restoration of Claim 10 wherein said translucent layer is removably mounted on said opaque dental substrate, said substrate comprising a dental mount having substantial hue and chroma and said method comprising removing said translucent layer from said dental mount and engaging said translucent layer with a dental cement and thereby a dental stump preparation, said dental cement being matched with the hue and chroma of said opaque dental substrate.

16. The method of preparing a dental restoration of Claim 15 wherein while said translucent layer is on said dental mount, said translucent layer is treated to form said shader layer.

17. The method of preparing a dental restoration of Claim 16 wherein said shaded translucent layer is at least substantially uncolored and translucent throughout except for said shader layer when removed from said opaque dental mount.

18. The method of Claim 17 wherein said translucent layer appears white and substantially free of hue and chroma to the unaided eye when viewed unmounted without internal opaque and without shader, and when viewed mounted with internal opaque passes the hue and substantially reduces the chroma of the internal opaque.

**19.** The method of preparing a dental restoration of Claim 10 wherein said translucent layer has a low hue and chroma.

**20.** A method of preparing a dental restoration comprising preparing an opaque dental mount having a specific chroma on the Munsell chroma scale and a specific Munsell hue; placing a crown, which is substantially hue and chroma free and translucent throughout, on said dental mount; applying shader to said crown and viewing said opaque dental mount while applying said shader; and removing said shaded crown from said opaque dental mount.

**21.** The method of Claim 20 wherein said shader is applied as outer layer to said crown and said shaded crown is at least substantially uncolored and translucent throughout except for said outer layer of shader when removed from said opaque dental mount.

**22.** The method of Claim 21 wherein said opaque dental mount has hue and substantial chroma and comprises mounting said shaded crown on a prepared tooth stump and applying opaque cement having substantially the same hue and chroma as said opaque dental mount between said shaded crown and said prepared tooth stump.

**23.** The method of Claim 22 wherein said crown appears white and substantially free of hue and chroma to the unaided eye when viewed unmounted without internal opaque and without shader, and when viewed mounted with internal opaque passes the hue and substantially reduces the chroma of the internal opaque.

**24.** The method of Claim 22 wherein said dental mount is a master model of said prepared tooth stump.

**25.** The method of Claim 20 wherein said crown comprising mica glass-ceramic.

**26.** The method of Claim 21 wherein said opaque dental mount has hue and substantial chroma and comprises mounting said shaded crown on a metal base member and applying opaque material having substantially the same hue and chroma as said opaque dental mount between said shaded crown and said metal base member.

**Revendications**

**1.** Restauration dentaire comprenant une couche de nuançage externe (23), une couche intermédiaire (22) qui est substantiellement exempte de teinte et de chrominance et translucide et une sous-structure opaque (21) qui présente une chrominance spécifique dans le système Munsell et une teinte Munsell spécifique.

**2.** Restauration dentaire selon la revendication 1 dans laquelle ladite sous-structure opaque est un support métallique avec un agent opacifiant de surface.

**3.** Restauration dentaire selon la revendication 1 dans laquelle ladite couche translucide incolore intermédiaire est montée de manière amovible sur ladite sous-structure opaque, ladite sous-structure comprenant une monture dentaire.

**4.** Restauration dentaire selon la revendication 1 dans laquelle ladite sous-structure comprend un ciment dentaire opaque engageant directement ladite couche translucide incolore intermédiaire.

**5.** Restauration dentaire selon la revendication 4 dans laquelle ledit ciment dentaire est engagé avec un support métallique loin de son engagement avec ladite couche translucide incolore intermédiaire.

**6.** Restauration dentaire selon la revendication 4 dans laquelle ledit ciment dentaire est engagé avec une préparation de souche de dent loin de son engagement avec ladite couche translucide incolore intermédiaire.

**7.** Restauration dentaire selon la revendication 1 dans laquelle ladite couche intermédiaire est un élément simple de couronne homogène en céramique verre mica fondue, ladite couche de nuançage externe comprenant une porcelaine dentaire nuancée.

8. Restauration dentaire selon la revendication 7 dans laquelle ladite sous-structure comprend une couleur de ciment dentaire opaque accordée avec ladite porcelaine dentaire nuancée pour correspondre à un nombre guide de couleurs.

9. Restauration dentaire selon la revendication 2 dans laquelle ledit agent opacifiant de surface est une porcelaine opaque dentaire, ladite couche intermédiaire est une seule couche de porcelaine dentaire et ladite couche de nuançage externe comprend une porcelaine dentaire nuancée.

10. Procédé pour préparer une restauration dentaire en appliquant sur un substrat dentaire opaque présentant une chrominance dans le système de chrominances Munsell et une teinte Munsell spécifique une couche intermédiaire, qui est substantiellement exempte de teinte et de chrominance et translucide, et une couche de nuançage.

11. Procédé selon la revendication 10 dans lequel ledit substrat dentaire opaque comprend un ciment opaque présentant une teinte et une chrominance substantielle.

12. Procédé selon la revendication 10 dans lequel ladite couche translucide apparaît blanche et substantiellement exempte de teinte et de chrominance à l'oeil nu lorsqu'elle est vue non montée sans élément opaque interne et sans couche de nuançage, et lorsqu'elle est vue montée avec un élément opaque laisse passer la teinte de l'élément opaque et réduit substantiellement la chrominance de l'élément opaque interne.

13. Procédé pour préparer une restauration dentaire selon la revendication 10 dans lequel ledit substrat dentaire opaque est un support métallique avec un ciment dentaire opaque sur lui engageant directement ladite couche translucide.

14. Procédé pour préparer une restauration dentaire selon la revendication 10 dans lequel ledit substrat dentaire opaque est une unité de support métallique, une porcelaine opaque dentaire sur celui-ci, ladite couche translucide est une seule couche homogène de porcelaine dentaire et ladite couche de nuançage comprenant la porcelaine dentaire nuancée.

15. Procédé pour préparer une restauration dentaire selon la revendication 10 dans lequel ladite couche translucide est montée de manière amovible sur ledit substrat dentaire opaque, ledit substrat comprenant une monture dentaire présentant une teinte et une chrominance substantielles et ledit procédé comprenant l'enlèvement de ladite couche translucide de ladite monture dentaire et l'engagement de ladite couche translucide avec un ciment dentaire et ainsi une préparation de souche de dent, ledit ciment dentaire étant assorti avec la teinte et la chrominance dudit substrat dentaire opaque.

16. Procédé pour préparer une restauration dentaire selon la revendication 15 dans lequel tandis que ladite couche translucide se trouve sur ladite monture dentaire, ladite couche translucide est traitée pour former ladite couche de nuançage.

17. Procédé pour préparer une restauration dentaire selon la revendication 16 dans lequel ladite couche translucide nuancée est au moins substantiellement incolore et translucide dans toute son épaisseur à l'exception de ladite couche de nuançage lorsqu elle est ôtée de ladite monture dentaire opaque.

18. Procédé selon la revendication 17 dans lequel ladite couche translucide apparaît blanche et substantiellement exempte de couleur et de chrominance à l'oeil nu lorsqu'elle est vue non montée sans élément opaque interne et sans couche de nuançage, et lorsqu'elle est vue montée avec un élément opaque laisse passer la teinte et réduit substantiellement la chrominance de l'élément opaque interne.

19. Procédé pour préparer une restauration dentaire selon la revendication 10 dans lequel ladite couche translucide présente une teinte et une chrominance faibles.

20. Procédé pour préparer une restauration dentaire comprenant la préparation d'une monture dentaire opaque présentant une chrominance spécifique dans le système de chrominances Munsell et une teinte Munsell spécifique; le placement d'une couronne, qui est substantiellement exempte de teinte et de chrominance et translucide dans toute son épaisseur, sur ladite monture dentaire; l'application d'une couche de nuançage sur ladite couronne et l'examen de ladite monture dentaire opaque tout en appliquant ladite couche de nuançage; et l'enlèvement de ladite couronne nuancée de ladite monture dentaire opaque.

21. Procédé selon la revendication 20 dans lequel ladite couche de nuançage est appliquée en tant que couche externe sur ladite couronne et ladite couronne nuancée est au moins substantiellement incolore et translucide dans toute son épaisseur à l'exception de ladite couche externe de nuançage lorsqu' elle est enlevée de ladite monture dentaire opaque.

22. Procédé selon la revendication 21 dans lequel ladite monture dentaire opaque présente une teinte et une chrominance substantielle et comprend le montage de ladite couronne nuancée sur une souche de dent préparée et l'application d'un ciment opaque présentant substantiellement les mêmes teinte et chrominance que ladite monture dentaire opaque entre ladite couronne nuancée et ladite souche de dent préparée.

23. Procédé selon la revendication 22 dans lequel ladite couronne apparaît blanche et substantiellement exempte de couleur et de chrominance à l'oeil nu lorsqu' elle est vue non montée sans élément opaque interne et sans couche de nuançage, et lorsqu' elle est vue montée avec un élément opaque laisse passer la teinte et réduit substantiellement la chrominance de l'élément opaque interne.

24. Procédé selon la revendication 22 dans lequel ladite monture dentaire est un gabarit original de ladite souche de dent préparée.

25. Procédé selon la revendication 20 dans lequel ladite couronne comprend de la céramique verre mica.

26. Procédé selon la revendication 21 dans lequel ladite monture dentaire opaque présente une teinte et une chrominance substantielle et comprend le montage de ladite couronne nuancée sur un élément de base métallique et l'application d'un matériau opaque présentant substantiellement les mêmes teinte et chrominance que ladite monture dentaire opaque entre ladite couronne nuancée et ledit élément de base métallique.

## Ansprüche

1. Dentalersatzmaterial , umfassend eine äußere Schicht (23), eine Zwischenschicht (22), welche im wesentlichen von Farbtönung und Farbsättigung frei und durchscheinend ist, und einen opaken Unterbau (21) mit einer spezifischen Farbtönung auf der Munsell-Skala und mit einer spezifischen Munsell-Farbsättigung.

2. Dentalersatzmaterial nach Anspruch 1, wobei der opake Unterbau eine Metallhalterung mit einem oberflächlichen Opakisierungsmittel ist.

3. Dentalersatzmaterial nach Anspruch 1, wobei die nicht gefärbte und durchscheinende Zwischenschicht entfernbar auf dem opaken Unterbau befestigt ist und wobei der Unterbau eine Dental halterung umfaßt.

4. Dentalersatzmaterial nach Anspruch 1, wobei der Unterbau einen opaken Dentalzement umfaßt, welcher die ungefärbte, durchscheinende Zwischenschicht direkt berührt.

5. Dentalersatzmaterial nach Anspruch 4, wobei der Dentalzement eine Metallhalterung berührt, welche entfernt ist von der Stelle seiner Berührung mit der ungefärbten, durchscheinenden Zwischenschicht.

6. Dentalersatzmaterial nach Anspruch 4, wobei der Dentalzement einen Dentalstumpf an einer Stelle berührt, welche entfernt ist von der Stelle der Berührung mit der ungefärbten, durchscheinenden Zwischenschicht.

7. Dentalersatzmaterial nach Anspruch 1, wobei die Zwischenschicht ein homogenes, einstückig gegossenes Glimmer-Glaskeramik-Kronenbauteil ist und wobei die äußere Schicht ein schattiertes Dentalporzellan ist.

8. Dentalersatzmaterial nach Anspruch 7, wobei der Unterbau einen opaken Dentalzement umfaßt, welcher farblich so an das schattierte Dentalporzellan angepaßt ist, daß eine Abstimmung mit einer Schattierungslehre besteht.

9. Dentalersatzmaterial nach Anspruch 2, wobei das Oberflächenopakisierungsmittel ein opakes Dentalporzellan ist und wobei die Zwischenschicht eine homogene einzige Zwischenschicht eines Dentalporzellans ist und wobei die äußere Schattierungsschicht ein schattiertes oder abgetöntes Dentalporzellan ist.

10. Verfahren zur Herstellung eines Dentalersatzmaterials durch Aufbringen einer Zwischenschicht auf ein opakes Dentalsubstrat mit einer spezifischen Farbtönung auf der Munsell-Skala und mit einer spezifischen Munsell-Farbsättigung, wobei die Zwischenschicht im wesentlichen frei von Farbtönung und Farbsättigung und durchscheinend ist, gefolgt vom Aufbringen einer schattierten oder abgetönten Schicht.

11. Verfahren nach Anspruch 10, wobei das opake Dentalsubstrat einen opaken Zement umfaßt, welcher eine Farbsättigung aufweist und eine substantielle Farbtönung.

12. Verfahren nach Anspruch 10, wobei die durchscheinende Schicht dem unbewaffneten Auge weiß und im wesentlichen frei von Farbtönung und Farbsättigung erscheint bei Betrachtung ohne Halterung und ohne innere Opakisierung und ohne schattierte oder abgetönteSchicht, und wobei die durchscheinende Schicht bei Betrachtung im gehalterten Zustand und mit einem inneren Opakisierungsmittel die Farbsättigung des Opakisierungsmittels durchläßt und die Farbtönung des inneren Opakisierungsmittels im wesentlichen verringert.

13. Verfahren nach Anspruch 10, wobei das opake Dentalsubstrat eine Metallhalterung ist mit einem aufgebrachten opaken Dentalzement, welcher die durchscheinende Schicht direkt berührt.

14. Verfahren nach Anspruch 10, wobei das opake Dentalsubstrat eine Metallhalterungseinheit mit einem darauf aufgebrachten opaken Dentalporzellan ist und wobei die durchscheinende Schicht eine homogene einzelne Schicht eines Dentalporzellans ist und wobei die abgetönte oder schattierte Schicht ein abgetöntes oder schattiertes Dentalporzellan umfaßt.

15. Verfahren nach Anspruch 10, wobei die durchscheinende Schicht entfernbar auf dem opaken Dentalsubstrat angeordnet ist und wobei das Substrat eine dentale Halterung umfaßt, welche im wesentlichen Farbtöne und Farbsättigung aufweist, wobei das Verfahren den Schritt der Entfernung der durchscheinenden Schicht von der Dentalhalterung umfaßt und das in Berührung bringen der durchscheinenden Schicht mit einem Dentalzement und damit auch mit einem Dentalstumpf, wobei der Dentalzement in Bezug auf Farbsättigung und Farbtönung dem opaken Dentalsubstrat angepaßt ist.

16. Verfahren nach Anspruch 15, wobei die durchscheinende Schicht auf der Dentalhalterung aufgebracht ist und wobei die durchscheinende Schicht behandelt wird zur Ausbildung der abgetönten oder schattierten Schicht.

17. Verfahren nach Anspruch 16, wobei die schattierte oder abgetönte durchscheinende Schicht mindestens im wesentlich ungefärbt ist und durchgängig durchscheinend mit Ausnahme der schattierten oder abgetönten Schicht, nachdem die durchscheinende Schicht von der opaken Dentalhalterung genommen ist.

18. Verfahren nach Anspruch 17, wobei die durchscheinende Schicht dem unbewaffneten Auge weiß und im wesentlichen frei von Farbtönung und Farbsättigung erscheint bei Betrachtung im nicht gehalterten Zustand ohne innere Opakisierungsschicht und ohne abgetönte oder schattierte Schicht und bei Betrachtung mit einem inneren Opakisierungsmittel die Farbsättigung der internen Opakisierung durchläßt und die Farbtönung wesentlich reduziert.

19. Verfahren nach Anspruch 10, wobei die durchscheinende Schicht eine niedrige Farbsättigung und Farbtönung aufweist.

20. Verfahren zur Herstellung eines Dentalersatzes, umfassend die Herstellung einer opaken Dentalhalterung mit einer spezifischen Farbtönung auf der Munsell-Farbtönungsskala und mit einer spezifischen Munsell-Farbsättigung; Anordnen einer Krone, welche im wesentlichen frei von Farbtönung und Farbsättigung ist und welche durchgängig durchscheinend ist, auf der Dentalhalterung; Aufbringen einer abgetönten oder schattierten Schicht auf die Krone und Betrachten der opaken Dentalhalterung während des Aufbringens der schattierten oder abgetönten Schicht; und Entfernung der schattierten Krone von der opaken Dentalhalterung.

21. Verfahren nach Anspruch 20, wobei die schattierte oder abgetönte Schicht als äußere Schicht auf die Krone aufgebracht ist und wobei die schattierte oder abgetönte Krone mindestens im wesentlichen ungefärbt und durchgängig durchscheinend ist mit Ausnahmeder äußeren Schicht der abgetönten oder schattierten Schicht, und zwar nach der Entfernung von der opaken Dentalhalterung.

22. Verfahren nach Anspruch 21, wobei die opake Dentalhalterung eine Farbsättigung und eine Farbtönung aufweist und wobei die abgetönte oder schattierte Krone auf einem vorbereiteten Zahnstumpf montiert wird und wobei ein opaker Zement mit im wesentlichen der gleichen Farbtönung und Farbsättigung wie die opake Dentalhalterung aufgebracht wird, und zwar zwischen der schattierten Krone und dem vorbereiteten Zahnstumpf.

23. Verfahren nach Anspruch 22, wobei die Krone dem unbewaffneten Auge weiß und im wesentlichen frei von Farbtönung und Farbsättigung erscheint bei Betrachtung im nicht gehalterten Zustand ohne innere Opakisierung und ohne abgetönte oder schattierte Schicht und bei Betrachung mit interner Opakisierung die Farbsättigung durchläßt und die Farbtönung der internen Opakisierung wesentlich verringert.

24. Verfahren nach Anspruch 22, wobei die Dentalhalterung ein Modell des vorbereiteten Zahnstumpfes ist.

25. Verfahren nach Anspruch 20, wobei die Krone eine Glimmer-Glaskeramik umfaßt.

26. Verfahren nach Anspruch 21, wobei die opake Dentalhalterung eine Farbsättigung und eine wesentliche Farbtönung aufweist und wobei die abgetönte oder schattierte Krone auf einer Metallbasis befestigt wird und wobei ein Opakisierungsmaterial aufgebracht wird, welches im wesentlichen die gleiche Farbsättigung und Farbtönung aufweist wie die opake Dentalhalterung zwischen der getönten Krone und dem Metallbasisbauteil.

14

## Fig. 1

## Fig. 2